# FASCICULE DE BREVET EUROPEEN

(11) **EP 4 031 689 B1**
(45) Date de publication et mention de la délivrance du brevet: **13.09.2023**
(21) Numéro de dépôt: 20768624.7
(22) Date de dépôt: 15.09.2020
(51) Int. Cl.: C22C 14/00, C22F 1/18, F16B 19/00, F16B 29/00

(54) **ELÉMENT DE FIXATION EN ALLIAGE DE TITANE ET PROCÉDÉ DE FABRICATION**
BEFESTIGUNGSELEMENT AUS TITANLEGIERUNG UND VERFAHREN ZUR HERSTELLUNG
TITANIUM ALLOY FASTENER AND MANUFACTURING METHOD

(30) Priorité: 16.09.2019 FR 1910205
(43) Date de publication de la demande: 27.07.2022
(73) Titulaire: Lisi Aerospace, 75012 Paris (FR)
(72) Inventeur: LEGER, Guillaume, 95840 VILLIERS-ADAM (FR)
(74) Mandataire: Lavoix
(86) Numéro de dépôt international: PCT/EP2020/075702
(87) Numéro de publication internationale: WO 2021/052929

(56) Documents cités:
- FR-A1- 2 940 319
- JP-A- 2016 138 318
- US-A1- 2017 146 046
- JONES N G ET AL: "DEVELOPMENT OF CHEVRON-SHAPED ALPHA PRECIPITATES IN Zi-5Al-5Mo-5V-3Cr", SCRIPTA MATERIALIA, ELSEVIER, AMSTERDAM, NL, vol. 60, no. 7, 1 avril 2009 (2009-04-01), pages 571-573, XP002531688, ISSN: 1359-6462
- PANZA-GIOSA R ET AL: "Mechanical properties of haet Treated Ti-5Al-5V-5Mo-3Cr: an attempt to Define Critical Properties of Various Microstructural Features", INTERNET CITATION, 26 juin 2008 (2008-06-26), page 1, XP002531689, Extrait de l'Internet: URL:http://asm.confex.com/asm/aero08/techp rogram/paper_20872.htm

## Description

La présente invention concerne un élément de fixation comprenant une surface sensiblement cylindrique de révolution disposée selon un axe, ladite surface comprenant une forme striée choisie parmi un filetage, un taraudage et une pluralité de gorges de traction, ledit élément de fixation étant réalisé en alliage de titane beta-métastable.

L'invention s'applique particulièrement aux éléments de fixation destinés à assembler des structures d'aéronefs.

Dans le domaine aéronautique, il est courant d'utiliser des fixations en alliage de titane. L'alliage de composition chimique Ti-6AI-4V, également dénommé « TA6V », est d'une utilisation très répandue. Cet alliage bénéficie en effet d'une faible densité, de l'ordre de 4,43 kg/dm³.

Cependant, le TA6V présente une résistance mécanique intrinsèque limitée à 1250 MPa environ. Par ailleurs, pour des fixations dont le diamètre dépasse 25 mm environ, la faible conductivité du TA6V limite l'efficacité des traitements thermiques. Il en résulte une résistance mécanique inférieure à 1100 MPa.

Les fixations en alliages de base Fer ou Nickel présentent généralement une meilleure résistance mécanique, mais leur densité est plus élevée que celle des fixations en titane.

Un alliage titane dit « Beta C », de composition chimique Ti-3AI-8V-6Cr-4Mo-4Zr, permet d'atteindre des résistances mécaniques de l'ordre de 1350 MPa pour une faible densité. Cependant, la composition de cet alliage le rend très onéreux.

Selon la température, le titane pur peut présenter deux phases cristallographiques : la phase alpha (α), structure hexagonale compacte, ou la phase beta (β), structure cubique centrée.

Les alliages de titane ont la propriété de conserver à température ambiante plus ou moins de phase alpha ou de phase beta, ce qui conditionne leurs propriétés mécaniques. En particulier, les alliages dits beta-métastables ou β-métastables présente une résistance mécanique pouvant atteindre 1500 MPa, pour une densité d'environ 4,7 kg/dm³.

Cependant, la faible ductilité des alliages beta-métastables rend leur transformation par déformation très sensible aux procédés de fabrication, notamment pour la fabrication de fixations aéronautiques.

Ainsi, des opérations de type roulage des filets extérieurs ou freinage des filets intérieurs peuvent engendrer des défauts dans les filets, comme des fissurations ou des bandes de cisaillement. Ces défauts dégradent alors les propriétés mécaniques de la pièce finale.

Par ailleurs, la déformation des matériaux métalliques est le plus souvent réalisée à chaud. Dans le cas des alliages beta-métastables, le chauffage peut conduire à des altérations de microstructure, qui dégradent les propriétés mécaniques du matériau.

US 2017/146046 A1 décrit des vis en alliage de Ti beta-métastable.

La présente invention a pour but de proposer un élément de fixation alliant une faible densité à une résistance mécanique importante, tout en permettant des opérations mécaniques de mise en forme sans apparition de défauts dégradant les propriétés de la pièce.

A cet effet, l'invention a pour objet un élément de fixation du type précité, dans lequel l'alliage présente une première microstructure constituée d'une première matrice et de nodules de phase alpha répartis dans ladite première matrice, la première matrice étant constituée de phase beta et de groupes de lamelles de phase alpha orientées dans une même direction. L'alliage de titane beta-métastable comprend en masse entre 4 et 6% d'aluminium, entre 4 et 6% de vanadium, entre 4 et 6% de molybdène et entre 2 et 4% de chrome.

Suivant d'autres aspects avantageux de l'invention, l'élément de fixation comporte l'une ou plusieurs des caractéristiques suivantes, prises isolément ou suivant toutes les combinaisons techniquement possibles :
- une distance moyenne entre les lamelles d'un même groupe est comprise entre 0,08 µm et 0,30 µm ;
- l'alliage de titane beta-métastable comprend en outre un ou plusieurs éléments d'addition, chacun desdits éléments d'addition ayant un pourcentage massique inférieur à 3%, une somme des pourcentages massiques desdits éléments d'additions étant inférieur à 6%.

L'invention se rapporte en outre à un procédé de fabrication d'un élément de fixation décrit ci-dessus, ledit procédé comprenant les étapes suivantes : fourniture d'une ébauche de fixation réalisée en alliage de titane beta-métastable, ledit alliage présentant une deuxième microstructure constituée d'une deuxième matrice de phase beta et de nodules de phase alpha répartis dans ladite deuxième matrice, ledit alliage présentant une température Tβ de transformation de la phase alpha en phase beta ; premier traitement thermique de l'ébauche de fixation, à une première température comprise dans une plage [Tβ - 100 °C ; Tβ - 10 °C], suivi d'un refroidissement ; puis deuxième traitement thermique de l'ébauche de fixation, à une deuxième température comprise entre 440 °C et 600 °C ; le procédé comprenant en outre une étape de déformation de l'ébauche de fixation pour réaliser la forme striée, après le premier traitement thermique.

Suivant d'autres aspects avantageux de l'invention, le procédé comporte l'une ou plusieurs des caractéristiques suivantes, prises isolément ou suivant toutes les combinaisons techniquement possibles :
- la deuxième température du deuxième traitement thermique est comprise entre 450 °C et 580 °C ;
- la deuxième microstructure présente un pourcentage surfacique de nodules de phase alpha compris entre 4% et 40% ;
- l'étape de déformation est réalisée à une température inférieure à 620°C ;
- l'élément de fixation comporte un filetage et l'étape de déformation est réalisée par roulage de l'ébauche de fixation au moyen de peignes ou d'une molette ;
- l'élément de fixation comporte un taraudage et l'étape de déformation est réalisée par freinage d'au moins un filet intérieur dudit taraudage.

L'invention sera mieux comprise à la lecture de la description qui va suivre, donnée uniquement à titre d'exemple non limitatif et faite en se référant aux dessins sur lesquels :
- [Fig 1] la figure 1 est une vue d'un élément de fixation selon un premier mode de réalisation de l'invention ;
- [Fig 2] la figure 2 est une représentation graphique d'une classification des alliages de titane ;
- [Fig 3] la figure 3 est une photographie à l'échelle micrométrique d'une microstructure d'un alliage de titane beta-métastable formant un élément de fixation selon un mode de réalisation de l'invention ;
- [Fig 4] la figure 4 est un ensemble de photographies à l'échelle micrométrique de microstructures d'alliages de titane beta-métastable formant des éléments de fixation selon différents modes de réalisation de l'invention ;
- [Fig 5] la figure 5 est une représentation graphique d'une distance entre des lamelles des microstructures de la figure 4 ;
- [Fig 6] la figure 6 montre des photographies micrométriques de microstructures d'un élément de fixation selon un mode de réalisation de l'invention, avec et sans traitement d'image ;
- [Fig 7] la figure 7 est une représentation graphique de mesures effectuées sur les microstructures de la figure 6 ;
- [Fig 8] la figure 8 est une photographie à l'échelle micrométrique d'une microstructure d'un alliage de titane beta-métastable formant un matériau semi-fini, utilisé dans un procédé de fabrication d'élément de fixation selon un mode de réalisation de l'invention ;
- [Fig 9] la figure 9 représente schématiquement un procédé de fabrication d'un élément de fixation selon un mode de réalisation de l'invention ;
- [Fig 10] la figure 10 est une photographie à l'échelle micrométrique d'une microstructure d'un élément de fixation analogue à l'élément de la figure 1 ;
- [Fig 11] la figure 11 est une photographie à l'échelle micrométrique d'un élément de fixation fabriqué selon un premier procédé ;
- [Fig 12] la figure 12 est une représentation graphique de mesures de résistance mécanique effectuées sur des éléments de fixation selon l'invention ;
- [Fig 13] la figure 13 est une photographie à l'échelle micrométrique d'un élément de fixation 110 selon un deuxième mode de réalisation de l'invention ; et
- [Fig 14] [Fig 15] les figures 14 et 15 sont des photographies à l'échelle micrométrique d'élément de fixation fabriqués selon des deuxième et troisième procédés.

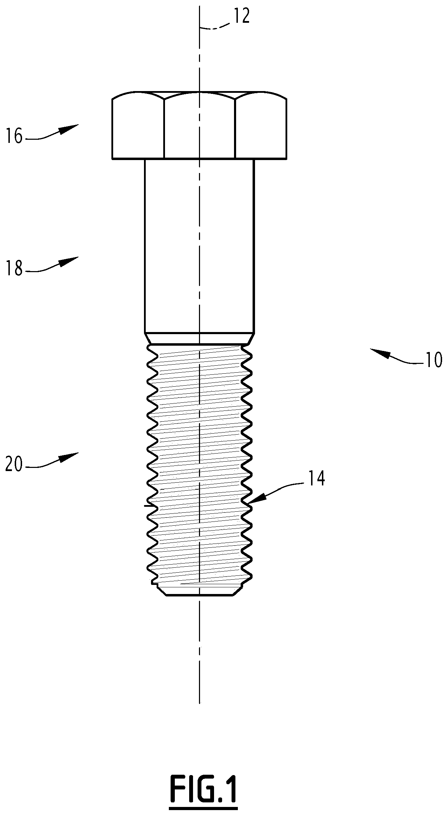

La figure 1 représente un élément de fixation 10 selon un premier mode de réalisation de l'invention.

L'élément de fixation 10 comprend une surface sensiblement cylindrique de révolution, disposée selon un axe 12. Ladite surface comprend une forme striée 14.

Plus précisément, dans le mode de réalisation de la figure 1, l'élément de fixation 10 est une vis comprenant une tête 16, un fût 18 lisse et une portion filetée 20, adjacents selon l'axe 12. La forme striée 14 constitue le filetage de la portion filetée 20 et présente une forme hélicoïdale.

On considère que la portion filetée 20 est « sensiblement cylindrique de révolution » dans le sens où les sommets des filets définissent une surface-enveloppe cylindrique de révolution.

En variante non représentée, l'élément de fixation comprenant un filetage est une tige filetée ou un goujon.

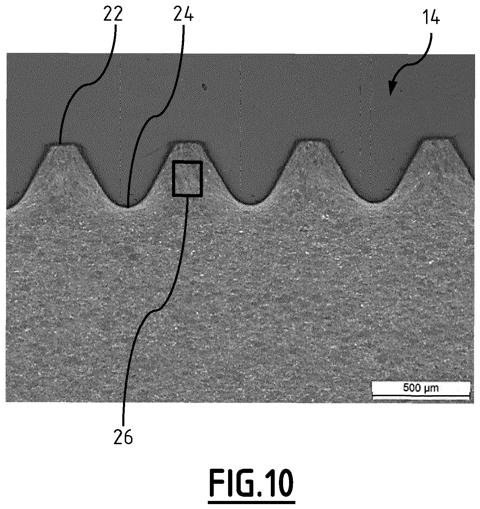

A titre d'illustration, la figure 10, qui sera décrite plus précisément ci-après, montre une photographie micrographique en coupe d'un filetage 14 comprenant une suite de sommets de filet 22 et de fonds de filet 24. Le coeur 26 d'un filet est signalé par un encadré.

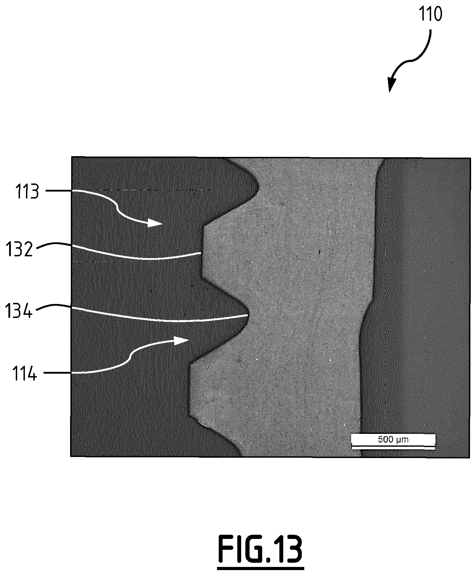

La figure 13, qui sera décrite plus précisément ci-après, montre une coupe d'une portion d'un élément de fixation 110 selon un deuxième mode de réalisation de l'invention. L'élément de fixation 110 est un écrou dont une surface interne 113, sensiblement cylindrique de révolution, comprend une forme striée 114 constituée par un taraudage. On considère que la surface 113 est « sensiblement cylindrique de révolution » dans le sens où les crêtes 132 des filets définissent une surface-enveloppe cylindrique de révolution. A titre indicatif, la forme de l'écrou 110 est similaire à celle des écrous décrits dans le document FR2947597, au nom de la Demanderesse.

Selon un autre mode de réalisation non représenté, la forme striée de l'élément de fixation est constituée par une pluralité de gorges de traction annulaires parallèles, adjacentes selon l'axe dudit élément de fixation. De telles gorges de traction sont notamment décrites dans le document EP1492961.

L'élément de fixation 10, 110 est réalisé en alliage de titane beta-métastable.

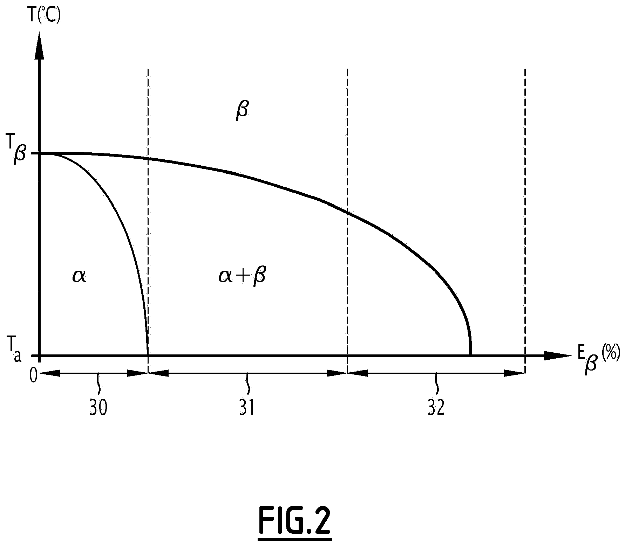

Plus précisément, les alliages de titane peuvent être classés en trois familles 30, 31, 32 selon leur proportion de phase alpha (α) ou beta (β) présente à température ambiante. La figure 2 montre la répartition de ces trois familles 30, 31, 32 en fonction de la température T et du pourcentage Eβ d'éléments bétagènes dans le titane. La température ambiante Ta est par exemple de l'ordre de 20 °C.

La famille 30 est celle des alliages α et quasi α. Ces alliages contiennent peu d'éléments d'addition dans le titane. Ces éléments sont notamment des éléments alphagènes, c'est-à-dire favorisant la formation de la phase alpha. Des éléments alphagènes sont par exemple l'aluminium, l'azote, le carbone et l'oxygène.

Les alliages α et quasi α se caractérisent par une insensibilité aux traitements thermiques. La microstructure des alliages α est uniquement composée de phase α. La microstructure des alliages quasi α est composée de phase α avec une faible proportion de phase β.

La famille 31, à laquelle appartient le TA6V, est celle des alliages α+β. Ces alliages contiennent des éléments bétagènes favorisant le maintien d'une minorité de phase β à température ambiante.

On distingue deux types d'éléments bétagènes : Les éléments béta-isomorphes, miscibles en toute proportion dans la phase β, comprennent l'hydrogène (H), le molybdène (Mo), le vanadium (V) et le niobium (Nb). Les éléments béta-eutectoïdes, pouvant former des précipités, comprennent le manganèse (Mn), le chrome (Cr), le silicium (Si), le nickel (Ni), le cuivre (Cu) et le fer (Fe), élément ayant le plus fort pouvoir bétagène.

La famille 32 est celle des alliages quasi-β ou β-métastables ou beta-métastables. Les alliages dont sont formés les éléments de fixations selon l'invention appartiennent à la famille 32.

Ces alliages beta-métastables contiennent une proportion d'éléments bétagènes favorisant le maintien d'une phase β dans une quantité supérieure aux alliages α+β et la présence d'une phase α en moindre quantité que dans un alliage α + β.

Après réalisation de traitements thermiques de durcissement, les alliages beta-métastables peuvent présenter une résistance mécanique élevée, d'environ 1250 - 1500 MPa.

Par ailleurs, comme visible sur la figure 2 et comme il sera évoqué par la suite, le titane et chaque alliage de titane présentent une température Tβ dite de « transus beta ». Cette température Tβ correspond à une température de transformation de la phase alpha en phase beta. Pour le titane pur, la température de transus beta est d'environ 882 °C.

Les alliages de titane beta-métastables utilisés dans le cadre de l'invention présentent la composition en masse suivante : entre 4 et 6% d'aluminium, entre 4 et 6 % de vanadium, entre 4 et 6% de molybdène et entre 2 et 4% de chrome. Le reste de l'alliage est composé de titane et éventuellement d'un ou plusieurs éléments d'addition tels que le fer ou le zirconium. Dans ce cas, chacun des éléments d'addition présente un pourcentage massique inférieur à 3%, la somme des pourcentages massiques desdits éléments d'additions restant inférieure à 6%.

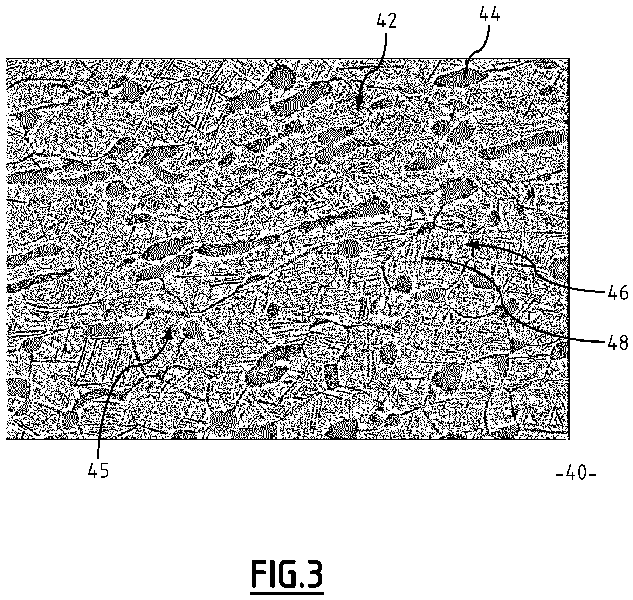

La figure 3 montre une microstructure 40 d'un alliage de titane beta-métastable utilisé dans le cadre de l'invention. La microstructure 40 comprend une matrice 42 et des nodules 44 de phase alpha, ou alpha primaire (αₚ), répartis dans ladite matrice.

La matrice 42 est constituée de phase beta 45 ainsi que de colonies 46 de lamelles 48 de phase alpha, ou alpha secondaire (αₛ). Une colonie 46 de lamelles 48 correspond à un groupe de lamelles 48 proches et orientées dans une même direction.

Plusieurs vis 10 telles que décrites ci-dessus ont été soumises à des analyses métallographiques. Chaque vis appartient à un lot A, B, C, D, E. Lesdits lots diffèrent par leur procédé de traitement de l'alliage de titane beta-métastable. Des exemples de procédés seront décrits ultérieurement.

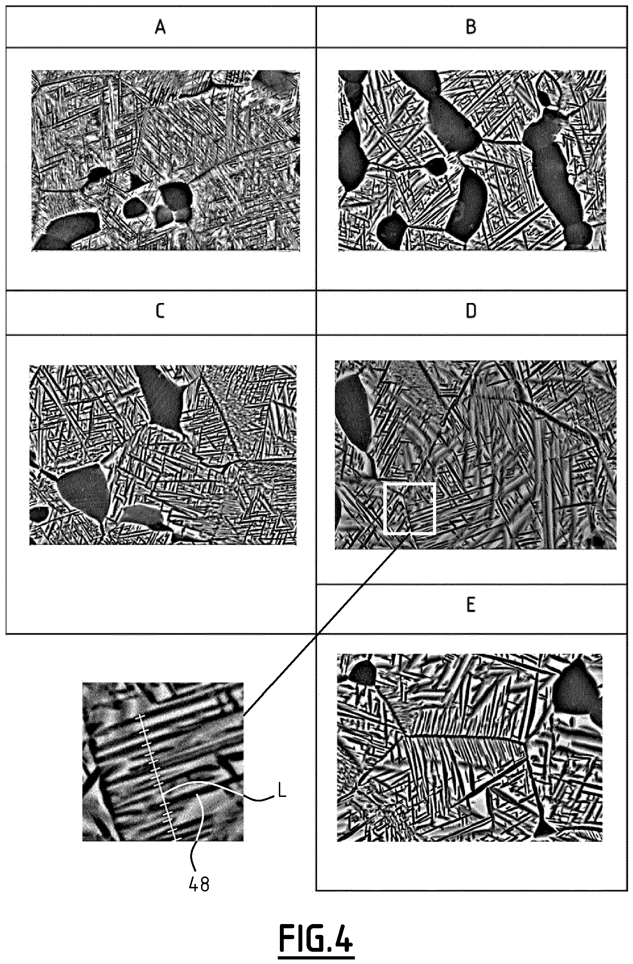

La figure 4 montre des images au microscope électronique à balayage prises dans le coeur 26 des filets d'une vis de chacun des lots A à E. L'échelle utilisée est de 1 µm pour les micrographies des vis B à D et de 2 µm pour les micrographies des vis A et E.

Les colonies 46 de lamelles sont visibles et orientées aléatoirement dans la matrice β 45 pour les cinq lots.

La microstructure 40 de chacune des vis A à E a été caractérisée, notamment par mesure d'une distance moyenne Dm entre les lamelles 48 des colonies 46.

Un exemple de méthode de mesure de Dm, utilisé ici, comprend les étapes décrites ci-après :
Une première étape est la découpe dans le sens longitudinal d'une vis 10 ; puis l'enrobage, le polissage et l'attaque chimique de la découpe, par exemple à l'acide fluorhydrique 2%, pour mettre en évidence la microstructure de la vis.

Dans une deuxième étape, au moins une et préférentiellement dix photographies de la microstructure sont prises au microscope électronique à balayage, par exemple au grossissement x10 000. De telles photographies sont présentées en figure 4.

Une analyse d'image est ensuite effectuée en traçant sur chaque image une ligne L au sein d'au moins deux colonies de lamelles αₛ 48 (figure 4) de façon à ce que la ligne soit perpendiculaire à un plus grand nombre possible de lamelles αₛ, puis en comptant le nombre de lamelles αₛ interceptées par ces lignes, et enfin en divisant la longueur de chaque ligne par le nombre de lamelles αₛ interceptées. Ainsi, la ligne L de la figure 4 mesure 1,7 µm et intercepte treize lamelles d'une même colonie, soit une distance inter-lamellaire de 0,13 µm.

Une moyenne effectuée sur dix images avec environ sept lignes par image donne une mesure fiable et reproductible.

Pour les vis A, on observe visuellement que les lamelles αₛ 48 sont très fines et resserrées. Les vis B, C et D ont des lamelles αₛ moyennement fines et espacées. Les vis E ont des lamelles αₛ assez grossières.

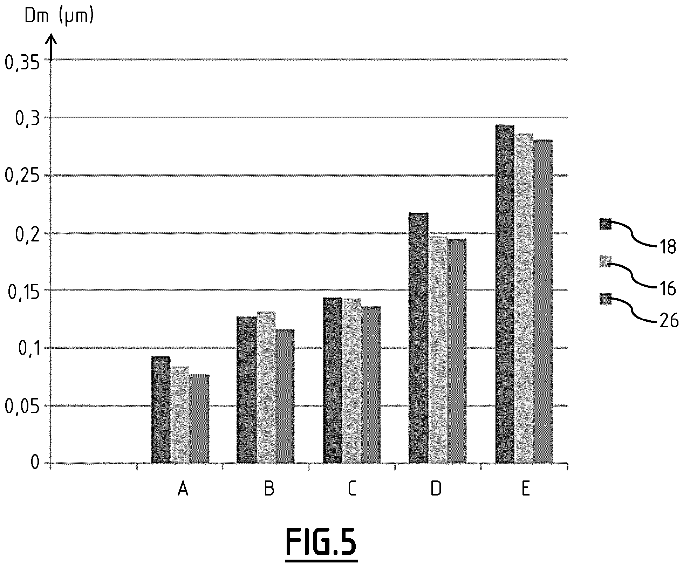

Les distances inter-lamellaires Dm ont également été mesurées sur des images de coupes réalisées dans la tête 16, le fût 18 et le coeur 26 des filets 14 afin d'identifier un possible effet du procédé sur la distance inter-lamellaires. En effet, chaque portion de la vis 10 a subi une déformation différente, puisque la tête 16 est forgée, le fût 18 est usiné, et les filets 14 sont roulés. Les résultats de ces mesures sont représentés en figure 5. On note que pour chaque lot A à E, les procédés de fabrication réduisent légèrement la distance entre les lamelles αₛ, probablement en raison de la déformation en compression appliquée.

Les vis A, B, C, D, E ont été soumises à des essais mécaniques pour déterminer leurs performances mécaniques. Des éprouvettes de tractions du même diamètre sont également réalisées pour le matériau de chaque lot, selon la norme ASTM E8.

Lors des essais de traction, la rupture des vis s'effectue dans les filets, tandis que la rupture des éprouvettes de traction s'effectue dans la partie centrale lisse.

Les résultats sont représentés en table 1 :

### [Table 1]

**Table 1**

| | **A** | **B** | **C** | **D** | **E** |
|---|---|---|---|---|---|
| Résistance à la traction Rm des éprouvettes (MPa) | 1554 +/- 5 | 1435 +/- 7 | 1343 +/- 6 | 1340 +/- 4 | 1270 +/- 6 |
| Allongement des éprouvettes (%) | 10 | 15,2 | 15,6 | 17,6 | 24 |
| Résistance à la traction Rm des vis dans les filets (MPa) | 1402 +/-59 | 1403 +/- 6 | 1413 +/- 9 | 1360 +/- 8 | 1256 +/- 8 |
| Limite en fatigue des filets (méthode de l'escalier, « staircase ») | 410 | 504 | 493 | 462 | 385 |
| Distance moyenne entre lamelles αₛ au coeur des filets (µm) | 0,06 | 0,12 | 0,14 | 0,19 | 0,28 |
| % nodules | 8 | 8 | 22 | 7 | 8 |

Les vis B, C et D ont une résistance moyenne supérieure à 1350 MPa et une ductilité supérieure à 10%, suffisante pour déformer la matière sans créer de défaut dans les filets.

Le matériau des vis E présente une résistance mécanique plus faible que les autres lots, de l'ordre de la résistance mécanique d'une fixation en TA6V.

La limite en fatigue passe de 410 Mpa pour la vis A à 460-500 MPa pour les vis B à D. Cependant, on observe un écart-type de 20 MPa environ pour les mesures de résistance mécanique des vis B à D. Au contraire, pour la vis A, l'écart-type est de120 MPa en raison de la fragilité du matériau et des défauts créés lors de la mise en forme par déformation.

L'espacement Dm entre les lamelles αₛ apparaît donc proportionnel à la résistance mécanique du matériau et inversement proportionnel à sa ductilité.

Il ressort des essais et mesures précédentes que les lamelles αₛ 48, espacées d'une distance moyenne Dm inférieure à 0,08 µm, conduisent à un matériau trop fragile. Il s'ensuit trois conséquences néfastes : dégradation de l'aptitude du matériau à être mis en forme par déformation, abaissement de la limite en fatigue, augmentation de la dispersion des mesures de résistance mécanique.

A l'inverse, des lamelles espacées d'une distance moyenne Dm supérieure à 0,30 µm conduisent à une matière ayant une résistance mécanique inférieure à 1240MPa, donc assez proche de l'alliage TA6V, ce qui réduit l'intérêt de l'utilisation d'un alliage β-métastable.

Dans la microstructure 40, il est donc préférable qu'une distance moyenne Dm entre les lamelles αₛ 48 au sein d'une colonie 46 soit comprise entre 0,08 µm et 0,30 µm.

Le pourcentage surfacique Pn de nodules 44 a également été mesuré sur les microstructures 40 des vis A, B, C, D et E. La méthode de mesure comprend d'abord des étapes de découpe, traitement et photographie similaires à celles décrites ci-dessus. Les photographies étant par exemple réalisées avec un grossissement x2000.

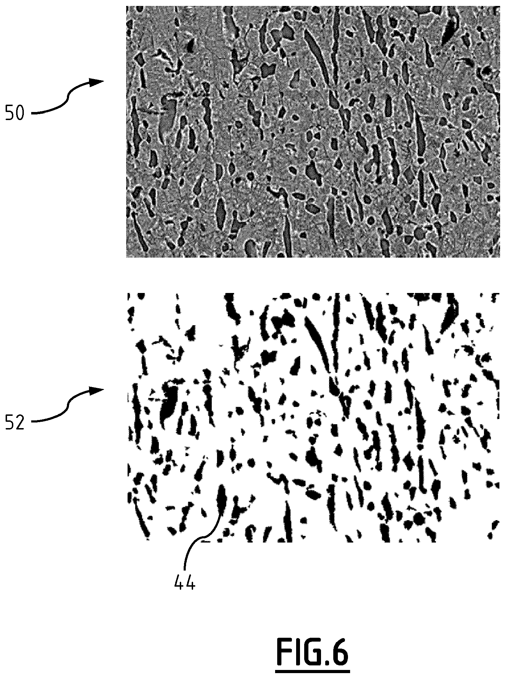

Une analyse d'image est ensuite effectuée par un logiciel de type « ImageJ » qui permet d'extraire les nodules 44 par seuillage d'image puis d'en calculer la surface cumulée par rapport à la surface totale d'observation. La figure 6 montre deux photographies 50 et 52, respectivement avant et après traitement d'image.

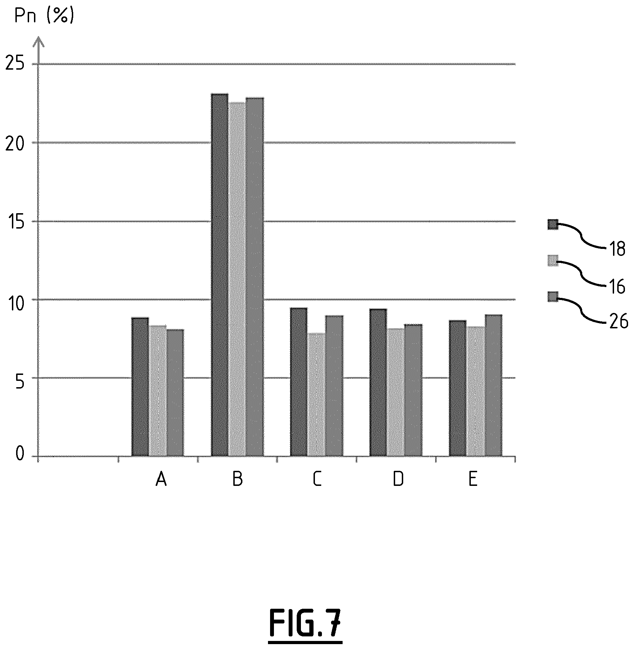

Une moyenne effectuée sur dix images donne une mesure fiable et reproductible. Les résultats des mesures sont présentés en figure 7. Pour les cinq lots A, B, C, D et E, le pourcentage surfacique Pn de nodules αₚ est globalement régulier quelle que soit la zone étudiée, soit le fût 18, la tête 16 ou le coeur 26 de filet. Les procédés de fabrication ne semblent donc pas affecter sensiblement la quantité de nodules.

Entre le lot B et le lot C, le pourcentage de nodules 44 varie grandement mais les propriétés mécaniques sont identiques, à l'écart-type de mesures près. Le pourcentage surfacique Pn de nodules 44 ne semble donc pas primordial pour assurer de bonnes propriétés mécaniques. En revanche, une répartition homogène de taille et de position des nodules au sein du matériau semble importante pour assurer des propriétés mécaniques homogènes.

Un procédé de fabrication d'un élément de fixation 10, 110 en alliage de titane beta-métastable selon l'invention va être décrit ci-après. Comme il sera détaillé, ce procédé comprend un premier et un deuxième traitement thermiques sur un matériau semi-fini en alliage de titane beta-métastable.

Cependant, d'autres procédés permettent également d'aboutir à une microstructure caractéristique de l'invention, telle que la microstructure 40 décrite ci-dessus.

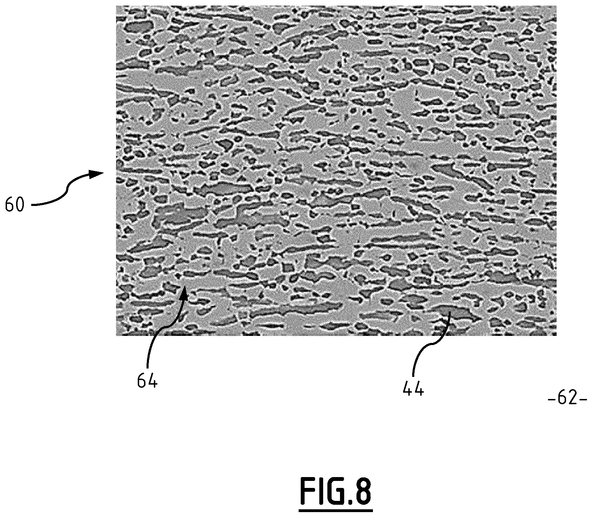

La figure 8 représente une microstructure 60 d'une ébauche de fixation 62 en alliage de titane beta-métastable, ou matériau semi-fini, mise en oeuvre pour la fabrication de l'élément de fixation 10, 110.

A température ambiante, la microstructure 60 du matériau semi-fini comporte une matrice 64 de phase beta dans laquelle sont répartis des nodules αₚ 44 de phase alpha, en gris foncé sur la figure 8. Les nodules 44 sont uniformément répartis dans la phase beta.

Bien que le pourcentage surfacique Pn de nodules 44 ne soit pas primordial, il est de manière préférentielle compris entre 4 et 40% dans la microstructure 60.

En effet, les traitements thermiques subséquents, décrits ci-après, vont tendre à diminuer le pourcentage de nodules αₚ. Si le matériau semi-fini en comprend moins de 4%, le matériau après les traitements thermiques sera très fragile car quasiment dépourvu de nodules αₚ. Cela sera néfaste pour les étapes ultérieures de déformation, en roulage ou freinage des filets, et abaissera les propriétés mécaniques finales de la fixation, notamment en fatigue.

A l'inverse, si le matériau semi-fini comprend plus de 40% de nodules αₚ, le matériau aura une faible résistance mécanique après les traitements thermiques, du fait du pourcentage trop important de nodules αₚ.

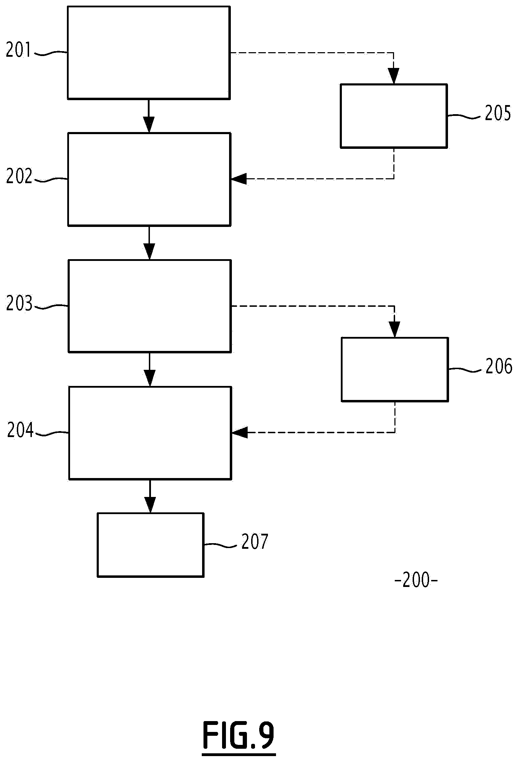

Le procédé 200 de fabrication de l'élément de fixation 10, 110 à partir de l'ébauche de fixation 62 comporte par exemple les étapes suivantes, illustrées sur la figure 9.

Une première étape 201 est la fourniture d'une ébauche de fixation 62 réalisée en alliage de titane beta-métastable, présentant à température ambiante une microstructure 60 telle que décrite ci-dessus. Dans le cas d'une vis ou d'un élément de fixation analogue, l'ébauche de fixation 62 est par exemple une barre ou un fil, préférentiellement d'un diamètre plus élevé que le diamètre nominal de l'élément de fixation 10 à fabriquer. La barre ou le fil est sous forme d'un bloc entier ou, en variante, est découpée en lopins lors de la première étape 201.

Dans la microstructure 60, la position et la répartition des nodules αₚ sont définies par les traitements thermomécaniques effectués par le fabricant du matériau semi-fini. Certaines de ces étapes sont généralement réalisées à une température légèrement inférieure à la température de transus beta T_{β}.

Une deuxième étape 202 est un premier traitement thermique, visant à contrôler la taille des nodules αₚ et leur répartition homogène dans la matrice β. Cette étape peut être réalisée par le fabricant du produit semi-fini ou par le fabricant de l'élément de fixation.

Le premier traitement thermique de l'étape 202 est de préférence réalisé à une température comprise entre (T_{β} - 100°C) et (T_{β} - 10°C). Bien que l'influence précise de la taille, de la répartition et du nombre de nodules αₚ sur les propriétés mécaniques ne soit pas bien comprise par la communauté scientifique, les essais de la Demanderesse ont montré que cette plage de température est la plus favorable pour l'application subséquente du deuxième traitement thermique. L'explication la plus probable serait la suivante :
- si le premier traitement thermique est effectué à une température trop proche de la température de transus beta T_{β}, la dissolution des nodules αₚ est trop importante et le matériau est trop fragile au niveau des filets après le deuxième traitement thermique ; et
- si le premier traitement thermique est effectué à une température trop éloignée de la température de transus beta T_{β}, la dissolution des nodules αₚ n'est pas suffisante et le matériau n'est pas assez résistant au niveau des filets après le deuxième traitement thermique.

Le premier traitement thermique est suivi d'un refroidissement de l'ébauche de fixation 62. Contrairement à l'alliage TA6V, l'alliage de titane β-métastable permet l'utilisation d'un refroidissement à l'air ambiant et son traitement thermique est efficace même pour des épaisseurs de plus de 25 mm, ce qui offre la possibilité de fabriquer des fixations de gros diamètre tout en conservant des propriétés mécaniques élevées.

Le refroidissement peut aussi s'effectuer de manière plus rapide dans un média de trempe, comme par exemple de l'eau, de l'huile, ou un mélange eau et polymère, afin d'accélérer les cadences de production et sans impact négatif sur l'efficacité du traitement thermique.

Une troisième étape 203 est un deuxième traitement thermique effectué après le premier traitement thermique. Ledit deuxième traitement thermique vise à précipiter de manière contrôlée des lamelles 48 de phase alpha dans la phase β, tout en conservant une certaine quantité de nodules αₚ 44.

De préférence, le deuxième traitement thermique est effectué à une température comprise entre 440 °C et 600 °C, plus préférentiellement comprise entre 450°C et 580°C.

L'intérêt de cette plage de température est d'obtenir la meilleure résistance mécanique possible tout en conservant une ductilité suffisamment élevée pour qu'une future déformation mécanique n'engendre pas de fissuration.

L'influence de la température du deuxième traitement thermique sur les propriétés mécaniques est que, pour une durée équivalente, plus la température est basse, plus les lamelles αₛ sont resserrées et plus la résistance mécanique du matériau est élevée et sa ductilité faible.

Inversement, plus la température est haute, plus les lamelles αₛ sont espacées et plus la résistance mécanique du matériau est faible et sa ductilité importante.

La durée du deuxième traitement thermique est de préférence comprise entre 1 h et 20 h. Cette durée a une importance de second ordre, mais une durée plus longue aura tendance à avoir le même effet sur la microstructure et les propriétés mécaniques qu'une température plus importante.

Le deuxième traitement thermique peut être suivi indifféremment d'un refroidissement à l'air ou dans un média de trempe tel que décrit ci-dessus. Alternativement, la matière traitée subit une déformation à chaud avant d'être complètement refroidie, par exemple à une température inférieure à la température du deuxième traitement thermique.

Une quatrième étape 204 est une opération de déformation d'une portion de l'ébauche de fixation 62, afin notamment de réaliser la forme striée 14, 114 de l'élément de fixation.

La quatrième étape 204 comprend par exemple une opération de roulage des filets 14 pour une vis 10, ou de déformation locale des filets internes 114 pour un écrou 110, étape couramment appelée « freinage ».

L'opération de déformation peut être réalisée à la température ambiante ou à chaud pour augmenter la ductilité, en sélectionnant la température de sorte à ne pas modifier la microstructure obtenue après le deuxième traitement thermique.

Pour des vis ou des éléments de fixation analogues, les températures de chauffe avant roulage ou de freinage des filets sont de préférence inférieures à 620°C. Une température supérieure risquerait d'altérer la microstructure obtenue après le deuxième traitement thermique. Cette altération, caractérisée par une baisse de la microdureté (voir Table 7 ci-après), est peu visible en métallographie mais s'explique par une diminution de la texture et/ou de l'énergie élastique stockées dans le matériau.

L'opération de roulage des filets peut être effectuée selon plusieurs méthodes. Le roulage en peigne permet de rouler à température ambiante des filets de petit diamètre nominal, par exemple inférieur à 6 mm. Le roulage manuel en molette est particulièrement utilisé pour le roulage de filets des plus gros diamètres nominal, par exemple supérieur à 6 mm.

Préférentiellement, la portion 20 de la vis destinée à être roulée par molette est chauffée avant le roulage. Dans ce cas, la température de chauffe est de préférence inférieure à 620°C pour éviter d'altérer la microstructure. Bien que cette altération ne soit pas toujours visible sur la microstructure de la pièce, les propriétés mécaniques en sont dégradées, avec une moyenne de résistance mécanique plus faible et un écart-type de valeurs très important.

Dans le cas du freinage d'un écrou, le choix de la température est par exemple réalisé selon le procédé décrit dans le document FR2947597, précédemment cité. La température de chauffe pour réaliser le freinage est préférentiellement gardée inférieure à 620°C.

En variante au procédé décrit ci-dessus, l'étape de déformation 204 est réalisée avant le deuxième traitement thermique 203, notamment pour le freinage d'un écrou 110.

La combinaison du premier et du deuxième traitements thermiques permet notamment d'obtenir des éléments de fixation 10, 110 ayant une résistance à la traction Rm supérieure à 1250 MPa. Lesdits éléments de fixation conservent néanmoins une ductilité supérieure à 10% pour permettre la déformation de la matière par roulage ou freinage en évitant la création de défauts dans les filets.

L'écart-type de valeur est faible, puisqu'inférieur à 5% de la résistance à la traction Rm. La résistance mécanique des filets ainsi créés est donc maximale, fiable et reproductible, et le matériau ne contient pas de défauts préjudiciables.

De manière optionnelle, le procédé de fabrication décrit ci-dessus comprend en outre une ou plusieurs premières étapes 205 de mise en forme de l'ébauche de fixation 62 avant l'étape 202 de premier traitement thermique.

Une telle première étape 205 de mise en forme est par exemple un matriçage d'une extrémité d'un lopin pour fabriquer une tête de vis, ou la forge de la forme extérieure d'un écrou.

En variante, une première étape 205 de mise en forme comprend l'usinage de la surface 113 d'un écrou pour réaliser le taraudage 114 destiné à être ultérieurement freiné.

De manière optionnelle, le procédé de fabrication décrit ci-dessus comprend en outre une ou plusieurs deuxièmes étapes 206 de mise en forme de l'ébauche de fixation 62 après l'étape 203 de deuxième traitement thermique et avant l'étape de déformation 204.

Une telle deuxième étape 206 de mise en forme vise par exemple à mettre au diamètre le fût lisse 18 d'une vis entre la tête 16 et la portion d'extrémité 20 destinée à être ultérieurement filetée.

En variante, une deuxième étape 206 de mise en forme comprend l'usinage de la surface 113 d'un écrou pour réaliser le taraudage 114 destiné à être ultérieurement freiné.

En variante, une deuxième étape 206 de mise en forme comprend l'usinage d'une surface extérieure de l'élément de fixation 10, 110 de sorte à éliminer une éventuelle couche d'oxydation formée à la surface de la pièce. Cette variante permet de mieux contrôler la température de déformation de la fixation quand la mesure de température est réalisée par pyrométrie, puisque l'état de surface est uniforme.

De manière optionnelle, le procédé de fabrication décrit ci-dessus comprend en outre une étape 207 de revêtement de l'élément de fixation 10, 110 après l'étape 204 de déformation. Le revêtement peut s'effectuer sur la totalité ou sur une partie seulement de la surface de la fixation, telle que le filetage ou le taraudage. Un exemple de revêtement utilisable est un revêtement aluminium contre la corrosion galvanique du type HI-KOTE^{™} commercialisé par la société Hi-Shear, décrit dans le brevet EP2406336.

De manière optionnelle, des étapes supplémentaires de fabrication ou de contrôle peuvent être réalisées entre les étapes 201, 202, 203, 204 décrites ci-dessus.

Des éléments de fixation 10, 110 selon l'invention ont été réalisés et comparés à des éléments de fixation distincts de l'invention. Les résultats sont décrits ci-dessous.

### Exemple 1

Un fil de 4,7 mm de diamètre, en alliage commercialisé sous la désignation Ti-18, est fourni et découpé en lopins. Le lot de matière Ti-18 étudié a une température de transus beta T_{β} égale à 863°C et une composition chimique comprenant 5,6% d'Aluminium, 5% de Molybdène, 5% de Vanadium, 2,5% de Chrome, 0,85% de Fer, ainsi que d'autres éléments d'addition comptant chacun pour moins de 0,2% en masse, et la somme de ces éléments comptant pour moins de 3% en masse. Le reste de la composition est composé de titane.

Un premier traitement thermique est réalisé à la température de (T_{β} - 85°C) pendant 2h suivi d'un refroidissement à l'eau. Un deuxième traitement thermique est réalisé à 460°C pendant 8h, suivi d'un refroidissement à l'air.

Le roulage des filets est effectué en roulage de type peigne à température ambiante. Les vis obtenues sont dénommées vis F.

Des vis en TA6V du même diamètre, dénommées vis G, sont fabriquées comme élément de comparaison. La fabrication s'effectue suivant les procédés de fabrication standard, soit un traitement thermique suivant AMS4967 suivi d'un roulage à froid en peigne.

Des éprouvettes de tractions du même diamètre sont également réalisées pour les deux matériaux en tant que contrôle de la bonne réalisation du traitement thermique.

Lors des essais de traction, la rupture des vis s'effectue dans les filets, tandis que la rupture des éprouvettes de contrôle s'effectue dans la partie centrale lisse. Les résultats sont présentés en Table 2.

### [Table 2]

**Table 2**

| | Vis G | Vis F | Ecart-type |
|---|---|---|---|
| | | | valeur absolue (%) |
| Résistance à la traction Rm des éprouvettes de contrôle (MPa) | 1204 +/- 9 | 1526 +/- 7 | 14 |
| | | | <1 % |
| Résistance à la traction Rm des vis (MPa) | 1196 +/- 11 | 1521 +/- 6 | 12 |
| | | | <1 % |
| Double cisaillement sur partie centrale lisse des éprouvettes de contrôle (MPa) | 779 +/- 7 | 848 +/- 7 | 14 |
| | | | 1,7 % |
| Limite en fatigue (MPa) | 386 | 452 | - |

Les essais montrent que les valeurs de la résistance à la traction Rm, du double cisaillement et de la limite en fatigue des fixations en Ti-18 fabriquées avec les traitements thermiques et la température de roulage de l'invention sont bien supérieures à celles de vis en TA6V comparables.

L'écart-type est très faible, ce qui indique que les résultats obtenus sont reproductibles.

Les valeurs de résistance à la traction dans les filets sont comparables aux valeurs de résistance des éprouvettes de contrôle, ce que signifie que le roulage n'a pas eu d'effet néfaste sur le matériau.

La figure 10 évoquée ci-dessus montre une photographie micrographique d'un filetage 14 de la vis F. L'inspection des filets ne montre aucun défaut majeur.

### Exemple 2

Un fil de 8 mm de diamètre, en alliage commercialisé sous la désignation Ti-55531, est fourni et découpé en lopins. Le lot de matière Ti-55531 étudié possède une température de transus beta T_{β} égale à 838°C et une composition chimique comprenant 4,5 % d'Aluminium, 5% de Molybdène, 5,1 % de Vanadium, 2,7 % de Chrome, 1,2 % de Zirconium, 0,4 % de Fer, d'autres éléments d'addition comptant chacun pour moins de 0,2% en masse, et la somme de ces éléments comptant pour moins de 3% en masse. Le reste est composé de titane.

Un premier traitement thermique est réalisé à la température de (T_{β} - 30°C) pendant 1h suivi d'un refroidissement à l'air. Un deuxième traitement thermique est réalisé à 530°C pendant 8h, suivi d'un refroidissement à l'air. Le roulage des filets est effectué manuellement par molette avec une température de roulage de 520°C à une seule extrémité pour fabriquer une vis de 8 mm de diamètre. Les vis obtenues sont dénommées vis H.

Des vis en TA6V du même diamètre, dénommées vis J, sont fabriquées comme élément de comparaison. La fabrication s'effectue suivant les procédés de fabrication standard, soit un traitement thermique suivant AMS4967 suivi d'un roulage à 400 °C en molette.

Des éprouvettes de tractions du même diamètre sont également réalisées pour les deux matériaux en tant que contrôle de la bonne réalisation du traitement thermique.

Lors des essais de traction, la rupture des vis s'effectue dans les filets, tandis que la rupture des éprouvettes de contrôle s'effectue dans la partie centrale lisse. Les résultats sont présentés en Table 3.

### [Table 3]

**Table 3**

| | Vis J | Vis H | Ecart type Valeur absolue (%) |
|---|---|---|---|
| Résistance à la traction Rm des éprouvettes de contrôle (MPa) | 1170 +/- 7 | 1435 +/- 7 | 14 |
| | | | <1% |
| Résistance à la traction dans les filets Rm (MPa) | 1160 +/- 10 | 1403 +/- 6 | 12 |
| | | | <1% |
| Double cisaillement sur partie centrale lisse des éprouvettes de contrôle (MPa) | 770 +/- 6 | 791 +/- 8 | 16 |
| | | | 2% |
| Limite en fatigue (MPa) | 380 | 504 | - |

Les essais montrent que les valeurs de la résistance à la traction Rm, du double cisaillement et de la limite en fatigue des fixations en Ti-55531 fabriquées avec les traitements thermiques de l'invention sont bien supérieures à celles de vis en TA6V comparables.

L'écart type est très faible, ce qui indique que les résultats obtenus sont reproductibles.

Les valeurs de résistance à la traction dans les filets sont comparables aux valeurs de résistance des éprouvettes de contrôle, ce que signifie que le roulage n'a pas eu d'effet néfaste sur le matériau. Par ailleurs, l'inspection des filets par micrographie ne montre aucun défaut majeur.

### Exemple 3

Un fil de 8 mm en alliage de l'exemple 2 est découpé en lopins. Un premier traitement thermique est réalisé à la température de (T_{β} - 30°C) pendant 2h suivi d'un refroidissement à l'air. Un deuxième traitement thermique est réalisé à 430°C pendant 8h, suivi d'un refroidissement à l'air. Le roulage des filets est effectué manuellement par molette avec une température de roulage de 520°C à une seule extrémité pour fabriquer une vis de 8 mm de diamètre. Les vis obtenues sont dénommées vis K.

Des vis en TA6V du même diamètre (vis L) sont fabriquées suivant les procédés de fabrication standard de l'exemple 2, comme élément de comparaison. Des éprouvettes de tractions du même diamètre sont également réalisées pour les deux matériaux en tant que contrôle de la bonne réalisation du traitement thermique.

Lors des essais de traction, la rupture des vis s'effectue dans les filets, tandis que la rupture des éprouvettes de contrôle s'effectue dans la partie centrale lisse. Les résultats sont présentés en Table 4.

### [Table 4]

**Table 4**

| | Vis L | Vis K | Ecart type Valeur absolue (%) |
|---|---|---|---|
| Résistance à la traction Rm des éprouvettes de contrôle (MPa) | 1170 +/- 7 | 1554 +/- 5 | 10 |
| | | | <1% |
| Résistance à la traction Rm dans les filets (MPa) | 1160 +/- 10 | 1402 +/- 59 | 118 |
| | | | 8,4% |
| Double cisaillement sur partie centrale lisse des éprouvettes (MPa) | 770 +/- 6 | 864 +/- 9 | 18 |
| | | | 2% |
| Limite en fatigue (MPa) | 380 | 410 | - |

Les essais montrent que les valeurs de la résistance à la traction Rm, du double cisaillement et de la limite en fatigue des fixations en Ti-55531 fabriquées avec les traitements thermiques de l'invention sont supérieures à celles de vis en TA6V comparables.

Cependant on note un abattement important de plus de 150 MPa entre la résistance en traction du matériau sur éprouvette et la résistance en traction des filets roulés. Egalement, l'écart-type de la résistance des filets roulés est très élevé (supérieur à 8%) et la limite en fatigue est relativement basse par rapport à la résistance du matériau.

Ces trois facteurs indiquent que le roulage a eu un effet néfaste sur le matériau. La raison probable est la ductilité trop faible du matériau avant le roulage, du fait de la température trop basse du deuxième traitement thermique.

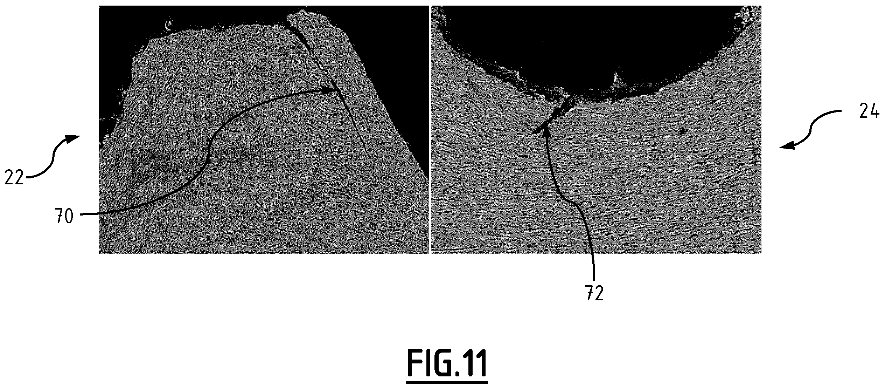

Comme cela est visible sur la figure 11, le roulage a généré des fissures 70, 72 importantes dans les sommets de filets 22 comme en fond de filet 24. Ces défauts compromettent l'intégrité de la fixation puisque les fissures peuvent générer des départs de criques et conduisent à des performances des fixations peu reproductibles, ce qui est rédhibitoire pour des fixations aéronautiques.

### Exemple 4

Un fil de diamètre 8 mm en alliage de l'exemple 2 est découpé en lopins. Un premier traitement thermique est effectué à la température de (T_{β} - 45°C) pendant 1h suivi d'un refroidissement à l'eau. Un deuxième traitement thermique est réalisé à 460°C pendant 8h, suivi d'un refroidissement à l'air.

Le roulage des filets est effectué manuellement par molette avec plusieurs températures de roulage T_{R} comprises entre 550°C et 650°C à une seule extrémité pour fabriquer une vis de 4,7 mm de diamètre. La résistance à la traction Rm et la limite conventionnelle de plasticité à 0,2% Rp sont mesurées, la rupture ayant lieu dans les filets.

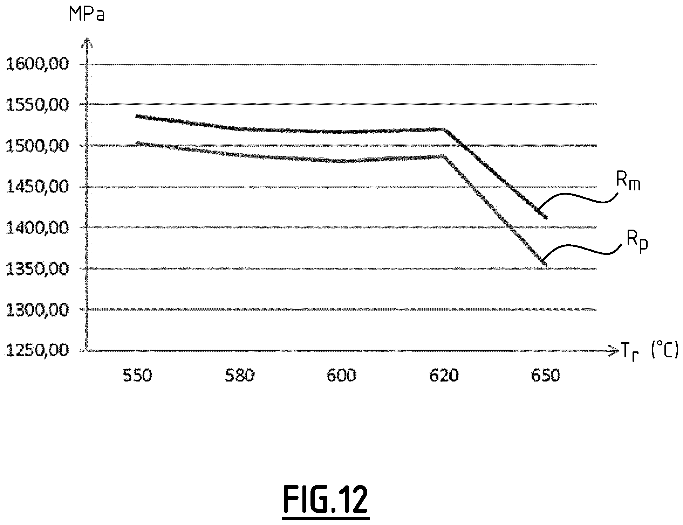

Les résultats sont présentés en figure 12. La résistance en traction des filets est d'environ 1500 MPa pour une température de chauffe avant roulage jusqu'à la température de 620°C. Au-delà, et bien que les filets aient un aspect visuel qui s'améliore avec la hausse de la température de chauffe avant rouage, les propriétés mécaniques sont fortement abaissées car la température de chauffe avant roulage, supérieure à 620°C, a altéré la microstructure formée lors du deuxième traitement thermique.

### Exemple 5

Un fil de 8mm en alliage de l'exemple 2 est découpé en lopins. Un premier traitement thermique est réalisé à la température de (T_{β} - 30°C) pendant 1h suivi d'un refroidissement à l'air. Un deuxième traitement thermique est réalisé à 530°C pendant 8h, suivi d'un refroidissement à l'air.

Les lopins sont ensuite usinés pour fabriquer un écrou à six pans (écrou M). Le freinage des filets est effectué avec une température de freinage de 520°C sur trois pans de l'écrou.

Des écrous en TA6V du même diamètre (écrou N) sont fabriqués comme élément de comparaison. La fabrication s'effectue suivant les procédés de fabrication standard, soit le traitement thermique de l'AMS4967 suivi d'un freinage à 470°C. Des éprouvettes de tractions du même diamètre sont également réalisées pour les deux matériaux en tant que contrôle de la bonne réalisation du traitement thermique.

Lors des essais de traction, la rupture des écrous s'effectue dans les filets, tandis que la rupture des éprouvettes de contrôle s'effectue dans la partie centrale lisse. Les résultats sont présentés en Table 5.

### [Table 5]

**Table 5**

| | Ecrou N | Ecrou M | Ecart type |
|---|---|---|---|
| | | | Valeur absolue (%) |
| Résistance à la traction Rm des éprouvettes de contrôle (MPa) | 1170 +/- 7 | 1435 +/- 7 | 14 |
| | | | <1% |
| Résistance à la traction des écrous (rupture dans les filets) (MPa) | 1164 +/- 10 | 1432 +/- 9 | 18 |
| | | | 1,25% |
| Dureté moyenne dans la zone non freinée (HV) | 363 +/- 10 | 390 +/-14 | 28 |
| Dureté moyenne dans la zone freinée (HV) | 357 +/- 12 | 387 +/- 12 | 24 |

Les résultats obtenus sont donc reproductibles et bien supérieurs à ceux du TA6V. L'écrou M est l'écrou 110 représenté à la figure 13 évoquée ci-dessus. Le taraudage 114 présente des sommets de filets 132 et des fonds de filet 134 ne présentent pas de défauts de type fissuration.

Les essais montrent que les valeurs de la résistance à la traction Rm, et de la dureté des fixations en Ti-55531 fabriquées avec les traitements thermiques de l'invention sont bien supérieures à celles de vis en TA6V comparables. L'écart-type est très faible, ce qui indique que les résultats obtenus sont reproductibles.

Les valeurs de résistance à la traction dans les filets sont comparables aux valeurs de résistance des éprouvettes de contrôle et les valeurs de dureté dans la zone freinée sont comparables aux valeurs de dureté dans la zone non freinée, ce que signifie que le freinage n'a pas eu d'effet néfaste sur le matériau.

Les résultats obtenus sont donc reproductibles et bien supérieurs à ceux de fixations en TA6V.

### Exemple 6

Un fil de 8 mm en alliage de l'exemple 2 est découpé en lopins. Un premier traitement thermique est réalisé à la température de (T_{β} - 30°C) pendant 1h suivi d'un refroidissement à l'air. Un deuxième traitement thermique est réalisé à 430°C pendant 8h, suivi d'un refroidissement à l'air.

Les lopins sont ensuite usinés pour fabriquer un écrou à six pans (écrou O). Le freinage des filets est effectué avec une température de freinage de 520°C sur trois pans de l'écrou.

Des écrous en TA6V du même diamètre (écrou P) sont fabriqués suivant les procédés de fabrication standard de l'exemple 5, comme élément de comparaison.

Des éprouvettes de tractions du même diamètre sont également réalisées pour les deux matériaux en tant que contrôle de la bonne réalisation du traitement thermique.

Lors des essais de traction, la rupture des écrous s'effectue dans les filets, tandis que la rupture des éprouvettes de contrôle s'effectue dans la partie centrale lisse. Les résultats sont présentés en Table 6.

### [Table 6]

**Table 6**

| | Ecrou P | Ecrou O | Ecart type Valeur absolue (%) |
|---|---|---|---|
| Résistance à la traction Rm des | 1170 +/- 7 | 1551 +/- 9 | 18 |
| éprouvettes de contrôle (MPa) | | | 1,1 % |
| Résistance à la traction Rm dans les filets (MPa) | 1164 +/- 10 | 1332 +/- 44 | 88 |
| | | | 6,6% |
| Dureté moyenne dans la zone non freinée (HV) | 363 +/- 10 | 429 +/- 9 | 18 |
| | | | 4,2% |
| Dureté moyenne dans la zone freinée (HV) | 357 +/- 12 | 413 +/- 14 | 24 |
| | | | 5,8 % |

Les propriétés mécaniques des écrous sont fortement dégradées : la valeur moyenne de la résistance à la traction pourrait paraitre intéressante mais l'écart-type est très important (supérieur à 5%) ce qui est typique d'un procédé peu reproductible.

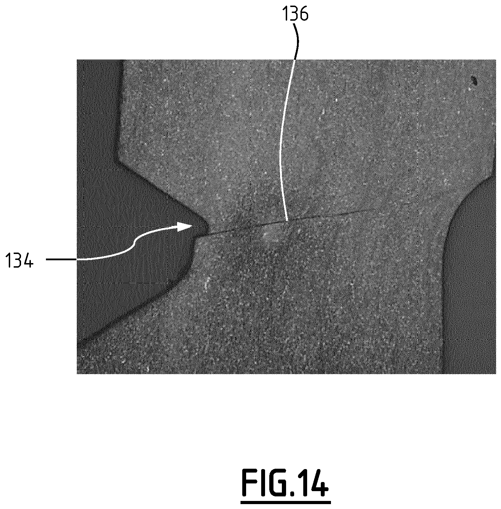

Une explication est que la matière avait une ductilité trop faible avant le roulage, du fait de la température trop basse du deuxième traitement thermique. Le roulage a généré des fissures importantes dans les sommets de filets comme en fond de filet. Un exemple de fissure 136 en fond de filet 134 est visible en figure 14. Ces défauts compromettent l'intégrité de la fixation, les fissures pouvant générer des départs de criques.

### Exemple 7

Un fil de 8mm en alliage de l'exemple 2 est découpé en lopins. Un premier traitement thermique est réalisé à la température de (T_{β} - 30°C) pendant 1h suivi d'un refroidissement à l'air. Un deuxième traitement thermique est réalisé à 460°C pendant 8h, suivi d'un refroidissement à l'air.

Les lopins sont ensuite usinés pour fabriquer un écrou à six pans (écrou R). Le freinage des filets est effectué avec une température de freinage de 650°C sur trois pans de l'écrou.

Des écrous en TA6V du même diamètre (écrou S) sont fabriqués suivant les procédés de fabrication standard de l'exemple 5, comme élément de comparaison.

Des éprouvettes de tractions du même diamètre sont également réalisées pour les deux matériaux en tant que contrôle de la bonne réalisation du traitement thermique.

Lors des essais de traction, la rupture des écrous s'effectue dans les filets, tandis que la rupture des éprouvettes de contrôle s'effectue dans la partie centrale lisse. Les résultats sont présentés en Table 7.

### [Table 7]

**Table 7**

| | Ecrou S | Ecrou R | Ecart type Valeur absolue (%) |
|---|---|---|---|
| Résistance à la traction Rm de la section lisse d'éprouvettes suiveuses du lot (MPa) | 1170 +/- 7 | 1551 +/- 9 | 18 |
| | | | 1,2% |
| Résistance à la traction Rm dans les filets (MPa) | 1164 +/- 10 | 1432 +/- 38 | 76 |
| | | | 5,3 % |
| Dureté moyenne dans la zone non freinée (HV) | 363 +/- 10 | 429 +/- 8 | 16 |
| Dureté moyenne dans la zone freinée (HV) | 357 +/- 12 | 328 +/- 27 | 54 |

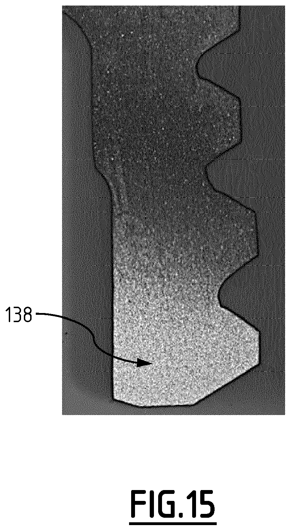

A ces températures de freinage, la microstructure à échelle submicronique est modifiée, ce qui rend le matériau moins dur localement. Comme le montre la figure 15, la zone freinée 138 présente une zone fortement décolorée après attaque chimique, signe de la modification de la microstructure submicronique. Les résultats mécaniques sont donc abaissés et dispersés.

## Revendications

1. Elément de fixation (10, 110) comprenant une surface (20, 113) sensiblement cylindrique de révolution disposée selon un axe (12), ladite surface comprenant une forme striée (14, 114) choisie parmi un filetage, un taraudage et une pluralité de gorges de traction,
ledit élément de fixation étant réalisé en un alliage de titane beta-métastable comprenant en masse entre 4 et 6% d'aluminium, entre 4 et 6 % de vanadium, entre 4 et 6% de molybdène et entre 2 et 4% de chrome,
**caractérisé en ce que** l'alliage de titane beta-métastable présente une première microstructure (40) constituée d'une première matrice (42) et de nodules (44) de phase alpha répartis dans ladite première matrice,
la première matrice étant constituée de phase beta et de groupes (46) de lamelles (48) de phase alpha orientées dans une même direction.

2. Elément de fixation selon la revendication 1, dans lequel une distance moyenne (Dm) entre les lamelles (48) d'un même groupe (46) est comprise entre 0,08 µm et 0,30 µm.

3. Elément de fixation (10, 110) selon l'une des revendications précédentes, dans lequel l'alliage de titane beta-métastable comprend en outre un ou plusieurs éléments d'addition, chacun desdits éléments d'addition ayant un pourcentage massique inférieur à 3%, une somme des pourcentages massiques desdits éléments d'additions étant inférieur à 6%.

4. Procédé (200) de fabrication d'un élément de fixation (10, 110) selon l'une des revendications précédentes, ledit procédé comprenant les étapes suivantes :
- fourniture (201) d'une ébauche de fixation (62) réalisée en alliage de titane beta-métastable, ledit alliage présentant une deuxième microstructure (60) constituée d'une deuxième matrice (64) de phase beta et de nodules (44) de phase alpha répartis dans ladite deuxième matrice, ledit alliage présentant une température (Tβ) de transformation de la phase alpha en phase beta ;
- premier traitement thermique (202) de l'ébauche de fixation, à une première température comprise dans une plage [Tβ - 100 °C ; Tβ - 10 °C], suivi d'un refroidissement ; puis
- deuxième traitement thermique (203) de l'ébauche de fixation, à une deuxième température comprise entre 440 °C et 600 °C ;
le procédé comprenant en outre une étape (204) de déformation de l'ébauche de fixation pour réaliser la forme striée (14, 114), après le premier traitement thermique.

5. Procédé de fabrication selon la revendication 4, dans lequel la deuxième température du deuxième traitement thermique (203) est comprise entre 450 °C et 580 °C.

6. Procédé de fabrication selon la revendication 4 ou la revendication 5, dans lequel la deuxième microstructure (60) présente un pourcentage surfacique (Pn) de nodules (44) de phase alpha compris entre 4% et 40%.

7. Procédé de fabrication selon l'une des revendications 4 à 6, dans lequel l'étape (204) de déformation est réalisée à une température inférieure à 620°C.

8. Procédé de fabrication selon l'une des revendications 4 à 7, dans lequel l'élément de fixation (10) comporte un filetage (14) et l'étape (204) de déformation est réalisée par roulage de l'ébauche de fixation au moyen de peignes ou d'une molette.

9. Procédé de fabrication selon l'une des revendications 4 à 7, dans lequel l'élément de fixation (110) comporte un taraudage (114) et l'étape (204) de déformation est réalisée par freinage d'au moins un filet intérieur dudit taraudage.

## Patentansprüche

1. Befestigungselement (10, 110), umfassend eine im Wesentlichen rotationszylindrische Oberfläche (20, 113), die entlang einer Achse (12) angeordnet ist, wobei die Oberfläche eine geriffelte Form (14, 114) umfasst, die aus einem Gewinde, einem Innengewinde und einer Vielzahl von Zugnuten ausgewählt ist,
wobei das Befestigungselement aus einer beta-metastabilen Titanlegierung gefertigt ist, umfassend in Massenanteilen zwischen 4 und 6 % Aluminium, zwischen 4 und 6 % Vanadium, zwischen 4 und 6 % Molybdän und zwischen 2 und 4 % Chrom,
**dadurch gekennzeichnet, dass** die beta-metastabile Titanlegierung ein erstes Mikrogefüge (40) aufweist, das aus einer ersten Matrix (42) und in der ersten Matrix verteilten Alpha-Phasen-Knoten (44) besteht,
wobei die erste Matrix aus Beta-Phase und Gruppen (46) von Alpha-Phasen-Lamellen (48) besteht, die in die gleiche Richtung ausgerichtet sind.

2. Befestigungselement nach Anspruch 1, wobei ein durchschnittlicher Abstand (Dm) zwischen den Lamellen (48) einer gleichen Gruppe (46) zwischen 0,08 µm und 0,30 µm ist.

3. Befestigungselement (10, 110) nach einem der vorhergehenden Ansprüche, wobei die beta-metastabile Titanlegierung zusätzlich ein oder mehrere Zusatzelemente umfasst, wobei jedes der Zusatzelemente einen Massenprozentsatz von weniger als 3 % aufweist, wobei eine Summe der Massenprozentsätze der Zusatzelemente weniger als 6 % ist.

4. Verfahren (200) zum Herstellen eines Befestigungselements (10, 110) nach einem der vorherigen Ansprüche, das Verfahren umfassend die folgenden Schritte:
- Bereitstellen (201) eines Befestigungsrohlings (62), der aus einer beta-metastabilen Titanlegierung gefertigt ist, wobei die Legierung ein zweites Mikrogefüge (60) aufweist, das aus einer zweiten Beta-Phasen-Matrix (64) und Alpha-Phasen-Knoten (44), die in der zweiten Matrix verteilt sind, besteht, wobei die Legierung eine Temperatur (Tß) zur Umwandlung der Alpha-Phase in Beta-Phase aufweist;
- erstes Wärmebehandeln (202) des Befestigungsrohlings bei einer ersten Temperatur in einem Bereich [Tβ - 100 °C; Tβ - 10 °C], gefolgt von einem Abkühlen; dann
- zweites Wärmebehandeln (203) des Befestigungsrohlings bei einer zweiten Temperatur zwischen 440 °C und 600 °C;
das Verfahren ferner umfassend einen Schritt (204) eines Verformens des Befestigungsrohlings zum Fertigen der geriffelten Form (14, 114) nach der ersten Wärmebehandlung.

5. Herstellungsverfahren nach Anspruch 4, wobei die zweite Temperatur der zweiten Wärmebehandlung (203) zwischen 450 °C und 580 °C liegt.

6. Herstellungsverfahren nach Anspruch 4 oder Anspruch 5, wobei das zweite Mikrogefüge (60) einen Flächenprozentsatz (Pn) an Alpha-Phasen-Knoten (44) zwischen 4 % und 40 % aufweist.

7. Herstellungsverfahren nach einem der Ansprüche 4 bis 6, wobei der Verformungsschritt (204) bei einer Temperatur von weniger als 620 °C durchgeführt wird.

8. Herstellungsverfahren nach einem der Ansprüche 4 bis 7, wobei das Befestigungselement (10) ein Gewinde (14) umfasst und der Verformungsschritt (204) durch Rollen des Befestigungsrohlings mittels Kämmen oder eines Schneidrads durchgeführt wird.

9. Herstellungsverfahren nach einem der Ansprüche 4 bis 7, wobei das Befestigungselement (110) ein Innengewinde (114) umfasst und der Verformungsschritt (204) durch Bremsen mindestens eines Innengewindegangs des Innengewindes durchgeführt wird.

## Claims

1. Fastener (10, 110) comprising a substantially rotationally cylindrical surface (20, 113) disposed along an axis (12), said surface comprising a ridged shape (14, 114) selected from a thread, an internal thread and a plurality of tension grooves,
said fastener being made of a beta-metastable titanium alloy comprising by weight between 4 and 6% aluminium, between 4 and 6% vanadium, between 4 and 6% molybdenum and between 2 and 4% chromium,
**characterised in that** the beta-metastable titanium alloy has a first microstructure (40) consisting of a first matrix (42) and alpha phase nodules (44) distributed in said first matrix,
the first matrix consisting of beta phase and groups (46) of alpha phase lamellae (48) oriented in the same direction.

2. Fastener according to claim 1, wherein an average distance (Dm) between the lamellae (48) of a same group (46) is between 0.08 µm and 0.30 µm.

3. Fastener (10, 110) according to any of the preceding claims, wherein the beta-metastable titanium alloy further comprises one or more additions, each of said additions having a mass percentage of less than 3%, a sum of the mass percentages of said additions being less than 6%.

4. A method (200) of manufacturing a fastener (10, 110) according to any of the preceding claims, said method comprising the following steps:
- supply (201) of a fastener blank (62) made of a beta-metastable titanium alloy, said alloy having a second microstructure (60) consisting of a second matrix (64) of beta phase and nodules (44) of alpha phase distributed in said second matrix, said alloy having a temperature (Tβ) of transformation of the alpha phase into the beta phase;
- first heat treatment (202) of the fastener blank at a first temperature in a range [Tβ - 100°C; Tβ - 10°C], followed by cooling; and then
- second heat treatment (203) of the fastener blank at a second temperature of between 440°C and 600°C;
the method further comprising a step (204) of deforming the fastener blank to form the ridged shape (14, 114), after the first heat treatment.

5. The manufacturing method according to claim 4, wherein the second temperature of the second heat treatment (203) is between 450°C and 580°C.

6. A method of manufacturing according to claim 4 or claim 5, wherein the second microstructure (60) has a percentage area (Pn) of alpha phase nodules (44) of between 4% and 40%.

7. A manufacturing process according to any of claims 4 to 6, wherein the deformation step (204) is performed at a temperature below 620°C.

8. A manufacturing method according to any of claims 4 to 7, wherein the fastener (10) has a thread (14) and the deformation step (204) is carried out by rolling the fastener blank by means of combs or a roller.

9. A manufacturing method according to any of claims 4 to 7, wherein the fastener (110) comprises an internal thread (114) and the deformation step (204) is performed by braking at least one internal thread of said internal thread.
